# EUROPÄISCHE PATENTANMELDUNG

(11) **EP 4 265 847 A1**
(43) Veröffentlichungstag der Anmeldung: **25.10.2023**
(21) Anmeldenummer: 23167793.1
(22) Anmeldetag: 13.04.2023
(51) Int. Cl.: E02D 3/046, B06B 1/16, E01C 19/30

(54) **UNWUCHTERREGER FÜR BODENVERDICHTUNGSVORRICHTUNGEN**

(30) Priorität: 14.04.2022 DE 102022109299
(71) Anmelder: Wacker Neuson Produktion GmbH & Co. KG, 85084 Reichertshofen (DE)
(72) Erfinder: STEFFEN, Michael, 80796 München (DE)
(74) Vertreter: Müller Hoffmann & Partner

(57) **Zusammenfassung**

Es wird ein Unwuchterreger für eine Bodenverdichtungsvorrichtung angegeben, mit wenigstens zwei drehbaren Unwuchtmassen (4), die zueinander gegenläufig drehbar gelagert sind, und mit wenigstens zwei Rotoren (1), wobei jeweils eine der Unwuchtmassen (4) mit einem der Rotoren (1) gekoppelt ist, wobei die wenigstens zwei Unwuchtmassen (4) und die zugehörigen Rotoren (1) koaxial zueinander gelagert sind, und wobei jedem der Rotoren (1) ein Stator (3) zugeordnet ist, derart, dass der Rotor (1) und der zugeordnete Stator (3) einen Elektromotor bilden.

## Beschreibung

Die Erfindung betrifft einen Unwuchterreger für eine Bodenverdichtungsvorrichtung sowie eine mit einem derartigen Unwuchterreger ausgestattete Bodenverdichtungsvorrichtung.

Als Bodenverdichtungsvorrichtungen sind Vibrationsplatten bzw. Rüttelplatten bekannt, die in der Regel eine Obermasse und eine relativ zu der Obermasse schwingend bewegliche Untermasse aufweisen. Häufig wird an der Obermasse ein Antriebsmotor, üblicherweise ein Verbrennungsmotor, vorgesehen, der über eine mechanische Kopplung (z.B. Riementrieb) oder eine hydraulische Kopplung einen Unwuchterreger antreibt, der an der Untermasse angeordnet ist. Der Unwuchterreger erzeugt Vibrationen, die direkt in eine zur Untermasse gehörende Bodenkontaktplatte zur Bodenverdichtung eingeleitet werden können.

Anstelle eines Verbrennungsmotors ist es auch bekannt, einen Elektromotor einzusetzen, der an der Obermasse oder auch direkt an der Untermasse angeordnet sein kann.

Die für Bodenverdichtungsvorrichtungen geeigneten Unwuchterreger können eine oder mehrere Unwuchtwellen aufweisen, die drehbar sind und auf denen gezielt eine Unwuchtmasse angebracht ist. Bei Rotation der Unwuchtwelle erzeugt die rotierende Unwuchtmasse aufgrund der Zentrifugalkraft Vibrationskräfte, die zur Bodenverdichtung genutzt werden können.

Bei kleineren Vibrationsplatten, sogenannten Schleppschwingern, wird meist nur eine Unwuchtwelle mit einer rotierenden Unwuchtmasse eingesetzt. Größere, zum Teil auch lenkbare Vibrationsplatten weisen häufig zwei parallel zueinander angeordnete Unwuchtwellen auf, die gegenläufig drehbar miteinander gekoppelt sind, z.B. durch ein Getriebe. Durch die gegenläufig und mit gleicher Drehzahl antreibbaren Unwuchtwellen ist es möglich, dass sich die bei Rotation einstellenden Fliehkräfte teilweise aufheben. Insbesondere kann die Phasenlage der Unwuchtwellen bzw. der darauf vorgesehenen Unwuchtmassen mit Hilfe einer Phaseneinstelleinrichtung derart eingestellt werden, dass sich die Vertikalkomponenten der durch die Unwuchtmassen erzeugten Fließkräfte addieren, während sich die Horizontalkomponenten der Fliehkräfte zumindest teilweise aufheben. Dadurch kann z.B. eine Standrüttlung erzeugt werden, also eine Bodenverdichtung auf der Stelle.

Durch Verändern der Phasenlage können auch gezielt Horizontalkraftkomponenten erzeugt werden, um eine Vorwärts- oder Rückwärtsbewegung der Vibrationsplatte zu erreichen. Bei entsprechender Gestaltung der Unwuchterreger kann eine Dreh- oder Lenkbarkeit der Vibrationsplatte erreicht werden. Das wird insbesondere ermöglicht durch Aufteilung von einer der Unwuchtwellen in zwei zueinander koaxial stehende, in gleiche Drehrichtung drehende Unwuchtwellen, die gemeinsam zu einer dritten Unwuchtwelle gegenläufig drehbar angeordnet sind.

Beispiele für derartige Schwingungserreger sind in DE 30 43 719 C2 und DE 29 09 204 A1 bekannt. Die Wirkung von Vertikal- und Horizontalkomponenten wird auch in der DE 199 43 391 A1 erläutert.

Bei Vibrationsplatten mit elektrischem Unwuchtantrieb kann die Energieübertragung von einer elektrischen Stromquelle zum Elektromotor über Kabel oder kabellos über induktive Komponenten erfolgen. Als Stromquellen können mitgeführte Akkus oder externe Stromquellen (Akkus, öffentliches Stromnetz, andere Maschinen mit entsprechender Vorbereitung) dienen.

Unwuchtantriebe mit in die Unwuchterreger integrierten oder an sie angekoppelten Elektromotoren benötigen einigen Bauraum, um die ihnen zugewiesenen Funktionen zu erfüllen. Im Vergleich zu einem durch einen Verbrennungsmotor z.B. über Riemenantrieb oder Hydraulikantrieb angetriebenen Unwuchterregern benötigt ein Unwuchtantrieb mit Elektromotor bei gleicher Leistungsfähigkeit erheblich mehr Platz auf der Untermasse, wenn auch der Elektromotor auf der Untermasse angeordnet sein soll. Zudem hat die Kombination aus Unwuchtantrieb und Elektromotor auf der Untermasse im Vergleich zu einer Riemenscheibe (als Teil eines Riemenantriebs) oder einem Hydraulikmotor (als Teil eines Hydraulikantriebs) ein ungünstigeres Leistungsgewicht.

Mit steigender Anforderung an die Funktionalität und Aufgaben der elektromotorisch betriebenen Vibrationsplatten (Vorwärtsfahrt, Rückwärtsfahrt, Drehen, Lenken) erhöhen sich die Masse und das Volumen der eingesetzten Elektromotoren, was dazu führt, dass auch das gesamte Bauvolumen, das Gewicht und die Kosten steigen, während sich die Handlichkeit verschlechtert. Insbesondere bei größeren Vibrationsplatten erschwert dies den Einsatz von Elektromotoren erheblich.

Aus der DE 10 2020 100 842 A1 ist ein sehr kompakter elektromotorischer Unwuchterreger für eine Bodenverdichtungsvorrichtung bekannt, bei dem der Rotor eines Elektromotors gleichzeitig eine Unwuchtmasse aufweist, wobei der Rotor am Umfang nur teilweise von einem Stator umschlossen ist.

Der Erfindung liegt die Aufgabe zugrunde, den baulichen Aufwand eines Unwuchterregers für eine Bodenverdichtungsvorrichtung derart zu minimieren, dass mit einem Minimum an technischen Komponenten alle Aufgaben erfüllt werden können, für die bei bekannten Systemen mehrere Motoren oder komplette Kopplungen mehrerer Erreger zu einem Antriebsmotor benötigt werden. Dadurch soll neben einer Reduktion von Kosten und Gewicht auch Platz gewonnen werden.

Die Aufgabe wird erfindungsgemäß durch einen Unwuchterreger mit den Merkmalen von Anspruch 1 gelöst. Vorteilhafte Ausgestaltungen sind in den abhängigen Ansprüchen angegeben. Weiterhing wird eine Bodenverdichtungsvorrichtung beschrieben, die vorteilhaft mit dem erfindungsgemäßen Unwuchterreger ausgestattet werden kann.

Es wird ein Unwuchterreger für eine Bodenverdichtungsvorrichtung angegeben, mit wenigstens zwei drehbaren Unwuchtmassen, die zueinander gegenläufig drehbar gelagert sind, und mit wenigstens zwei Rotoren, wobei jeweils eine der Unwuchtmassen mit einem der Rotoren gekoppelt ist, wobei die wenigstens zwei Unwuchtmassen und die zugehörigen Rotoren koaxial zueinander gelagert sind, und wobei jedem der Rotoren ein Stator zugeordnet ist, derart, dass der Rotor und der zugeordnete Stator einen Elektromotor bilden.

Somit ist jede der Unwuchtmassen mit einem eigenen Rotor gekoppelt und von dem Rotor getragen. Der jeweilige Rotor bildet zusammen mit der Unwuchtmasse in diesem Sinne eine Unwuchtwelle.

Die Unwuchtmasse kann separat zu dem Rotor aufgebaut sein und dann an diesem angekoppelt werden. Ebenso ist es aber auch möglich, dass die Unwuchtmasse direkt in den Rotor integriert ist, wie z.B. in der DE 10 2020 100 842 A1 beschrieben.

Bei dem erfindungsgemäßen Unwuchterreger sind somit wenigstens zwei voneinander getrennte Unwuchtmassen vorhanden, die durch zwei ebenfalls voneinander getrennte Elektromotoren, jeweils mit einem Rotor und einem Stator, angetrieben werden. Die Drehachsen der Unwuchtmassen und damit der Rotoren sind koaxial zueinander, mithin also auf einer gemeinsamen Achse angeordnet.

Als Elektromotoren können verschiedene Motortypen realisiert werden, z.B. Außenläufer, Innenläufer, Induktionsmotoren, Synchronmotoren, Synchron-Reluktanzmotoren, Switched Reluctance Motoren, BLDC, EC, Stepper oder ähnliche. Dementsprechend sind die Rotoren und Statoren jeweils auszubilden.

Eine Unwuchtmasse kann auch mehrere (Teil-)Unwuchtmassenelemente aufweisen bzw. durch diese gebildet werden, die aber bezüglich des sie tragenden Rotors zusammenwirken und so gemeinsam die (gemeinsame) Unwuchtmasse ergeben. Der Rotor trägt dementsprechend die Unwuchtmasse bzw. die sie bildenden mehreren Unwuchtmassenelemente.

Die Rotoren und die jeweils von ihnen getragenen Unwuchtmassen sind koaxial zueinander gelagert, auf einer gemeinsamen virtuellen Drehachse.

Dabei sind mehrere Ausführungen möglich: so können die Rotoren mit den Unwuchtmassen auch auf einer gemeinsamen physischen Drehachse gegenläufig drehbar gelagert sein. Ebenso können die Rotoren auch auf getrennten physischen Drehachsen gelagert sein, die dann allerdings jeweils koaxial zueinander, insbesondere auf einer gemeinsamen virtuellen Drehachse angeordnet sein müssen.

Es kann eine Steuerung vorgesehen sein, zum Ansteuern der Elektromotoren und damit zum Einstellen und Verändern der Phasenlage der wenigstens zwei Unwuchtmassen zueinander. Die Bedeutung der Verstellung der Phasenlage wurde oben bereits im Zusammenhang mit dem Stand der Technik erläutert. In diesem Zusammenhang sei erneut auf die DE 199 43 391 A1 sowie auf die DE 29 09 204 A1 verwiesen, in denen das Grundprinzip für die Verstellung der Phasenlage dargestellt wird, so dass sich an dieser Stelle eine Wiederholung erübrigt.

Die Steuerung ist in der Lage, die Phasenlage jedes Rotors und damit der zugehörigen Unwuchtmasse präzise einzustellen, insbesondere durch Ansteuern des jeweiligen Elektromotors. Durch das Zusammenwirken der Fliehkräfte wird durch den Unwuchterreger ein resultierender Kraftvektor gebildet, der in der gewünschten Weise auf die den Unwuchterreger tragende Bodenkontaktplatte und damit auf den zu verdichtenden Boden einwirkt.

Bei einer Variante kann wenigstens einer der Statoren den ihm zugeordneten Rotor am Umfang nur über ein Kreissegment umgeben. Das bedeutet, dass der Stator den Rotor nicht vollständig, sondern nur teilweise umschließt. Das Kreissegment ist dementsprechend insbesondere kleiner als 360°.

Alternativ ist es auch möglich, dass der Stator im Wesentlichen zylinderförmig ausgebildet ist und den Rotor am Umfang vollständig zylinderartig oder hülsenartig umschließt.

Die mit einem Rotor gekoppelte Unwuchtmasse kann z.B. zwei Unwuchtmassenelemente aufweisen, die jeweils seitlich an den Stirnseiten des im Wesentlichen scheibenförmigen Rotors angebracht sein können. Die Unwuchtmassenelemente können dementsprechend vom Rotor getragen werden, wobei die Drehachse der Unwuchtmassenelemente und die Drehachse des Rotors zusammenfallen.

Die Unwuchtmassenelemente können ihrerseits z.B. auch aus mehreren Blechelementen bestehen bzw. geblecht aufgebaut sein, wobei die Blechelemente dann seitlich an den Rotor befestigt sind.

Es kann eine physische Achse vorgesehen sein, wobei die Unwuchtmassen mit den zugeordneten Rotoren auf der Achse gegenläufig drehbar gemeinsam gelagert sind. Bei dieser Variante ist somit eine gemeinsame physische Achse für die Unwuchtmassen und die Rotoren vorgesehen. Die physische Achse fällt in diesem Fall mit der oben bereits erwähnten virtuellen Drehachse zusammen. Die physische Achse kann starr gelagert sein, z.B. in einem geeigneten Gehäuse oder einem Träger, wobei die von der Achse getragenen Rotoren jeweils mit geeigneten Lagern, z.B. Wälzlagern auf der Achse gelagert sein können.

Bei einer Varianten kann jede der Unwuchtmassen mit ihrem zugeordneten Rotor auf einem eigenen (physischen) Achsenelement gelagert sein. Dadurch ist es möglich, jeweils eine Einheit mit einem Rotor, einer Unwuchtmasse und dem eigenen Achsenelement aufzubauen.

Jeder der Rotoren kann mit einem Achsenelement gekoppelt sein, das in einer Lagereinrichtung drehbar gelagert ist. Bei dieser Variante ist der Rotor nicht auf dem Achsenelement drehbar gelagert, sondern mit dem Achsenelement gekoppelt, insbesondere in Drehrichtung starr gekoppelt, z.B. durch eine geeignete Welle-Nabe-Verbindung. Das Achsenelement wiederum ist dann in einer Lagereinrichtung drehbar gelagert, wodurch auch der zugehörige Rotor mit der Unwuchtmasse drehbar gelagert ist.

Bei einer besonderen Ausführungsform können die Lagereinrichtung, das Achsenelement, der Stator, der Rotor und die mit dem Rotor gekoppelte Unwuchtmasse eine Erregereinheit bilden. Die Erregereinheit kann dabei insbesondere eine kompakte Einheit sein, die individuell verbaut werden kann. Eine Erregereinheit weist dabei genau einen Rotor und ein Achsenelement auf. Der Stator kann den Rotor am Umfang vollständig oder teilweise (nur über ein Kreissegment) umschließen.

Die einzelne Erregereinheit kann mit einer weiteren Erregereinheit oder auch mit mehreren weiteren Erregereinheiten beliebig kombiniert werden. Dabei ist die eine Erregereinheit eine Baugruppe, die individuell handhabbar ist. Die Erregereinheit kann als Ganzes montierbar sein und z.B. auf der Bodenkontaktplatte einer Vibrationsplatte befestigt werden.

Der erfindungsgemäße Unwuchterreger kann vorteilhaft bei einer Bodenverdichtungsvorrichtung eingesetzt werden. Dementsprechend wird eine Bodenverdichtungsvorrichtung angegeben, mit einer Obermasse, mit einer relativ zu der Obermasse beweglichen Untermasse, mit einer Bodenkontaktplatte zur Bodenverdichtung, mit einer zwischen der Obermasse und der Untermasse wirkenden Schwingungsentkopplungsvorrichtung und mit einem zu der Untermasse gehörenden Unwuchterreger in der oben beschriebenen Art, zum Beaufschlagen der Bodenkontaktplatte mit einer Unwuchtkraft.

Die Bodenverdichtungsvorrichtung, z.B. eine Vibrations- oder Rüttelplatte, kann dabei sehr kostengünstig und platzsparend aufgebaut werden, weil der für ihre Leistungsfähigkeit relevante Unwuchterreger an der Untermasse entsprechend den oben angegebenen Spezifikationen sehr kompakt aufgebaut sein kann.

Bei einer Ausführungsform kann der Unwuchterreger wenigstens zwei Erregereinheiten aufweisen, die auf der Bodenkontaktplatte angebracht sind, wobei die Erregereinheiten derart zueinander auf der Bodenkontaktplatte angeordnet sind, dass die Rotoren der beiden Erregereinheiten auf einer gemeinsamen virtuellen Drehachse koaxial zueinander angeordnet und zueinander gegenläufig drehbar sind. Dementsprechend sind die beiden jeweils - wie oben beschrieben - eine kompakte Einheit bildenden Erregereinheiten in Achsrichtung gesehen hintereinander aufgebaut, wobei die Rotoren gegenläufig drehbar sind.

Die Steuerung kann ausgebildet sein, um die Phasenlage der Rotoren und damit der Unwuchtmassen in den Erregereinheiten in einer gewünschten Weise einzustellen. Das Einstellen der Phasenlage kann z.B. durch entsprechende Ansteuerung der Erregung der Elektromotoren oder Ansteuern der Statorpole erfolgen. Zudem kann eine Bedieneinrichtung für einen Bediener vorgesehen sein, um einen Steuerwunsch für die Wirkung der Bodenverdichtungsvorrichtung vorzugeben. Die Bedieneinrichtung kann z.B. eine Fernbedienung bzw. Fernsteuerung sein, die Steuerelemente, wie z.B. einen Joystick, aufweist, mit der der Bediener seinen Steuerwunsch vorgeben kann.

Die Bedieneinrichtung kann mit der Steuerung gekoppelt sein, um den vom Bediener durch Betätigen der Bedieneinrichtung vorgegebenen Bedienerwunsch umzusetzen. Dazu kann die Steuerung die Phasenlage der gegenläufig drehenden Rotoren entsprechend einstellen. Zu diesem Zweck ist es hilfreich, wenn die Steuerung jeweils die exakte Stellung des Rotors bzw. der an dem Rotor vorgesehenen Unwuchtmasse kennt und dadurch exakt "weiß", welcher Fliehkraftvektor jeweils durch den Rotor und die Unwuchtmasse erzeugt wird. Wie oben erläutert, bestimmt die Phasenlage der gegeneinander drehenden Rotoren die resultierende Kraftwirkung des Unwuchterregers und damit einerseits die Verdichtungswirkung und andererseits die Vorwärts- oder Rückwärtsbewegung. Zudem kann bei einem Unwuchterreger mit mehreren Rotoren auch eine Drehwirkung um die Hochachse bzw. Lenkwirkung erzeugt werden, wenn die Phasenlage der Rotoren mit den Unwuchtmassen entsprechend eingestellt wird.

Gemäß der Erfindung sind somit Bauformen möglich, bei denen ein Unwuchterreger nur eine Drehachse bzw. eine Welle aufweist, die gleichzeitig die Motorwelle für mehrere (Antriebs-)Elektromotoren und davon angetriebene Unwuchten ist. Durch den einfachen Aufbau können bedarfsweise verschiedene Kombinationen von Erregereinheiten gewählt werden. Die Unwuchtmassen können durch eine Blech-Asymmetrie an den einzelnen Rotoren realisiert werden, indem gezielt durch das Anbringen von Blechen an einem Rotor eine Unwuchtmasse erzeugt wird.

Die Steuerung erlaubt es, die Motoren hinsichtlich ihrer Drehzahl und der Lagewinkel der Rotoren bzw. der an den Rotoren angebrachten Unwuchten zueinander einzustellen.

Es ist möglich, verschiedene Motortypen auf einer gemeinsamen Welle bzw. Drehachse anzuordnen.

Wenn der Stator lediglich ein Kreissegment abdeckt, also den Rotor nicht hülsenartig bzw. zylinderförmig umschließt, ist es erforderlich, die Statorspulen in geeigneter Weise weiterzuschalten, um eine Drehung des Rotors zu erzeugen. Derartige Motorsteuerungen sind bekannt (z.B. Switched Reluctance Motoren).

Durch die gemeinsame Nutzung einer Drehachse bzw. einer Welle sowie der Lager der Welle in einem Erregergehäuse lässt sich die Anzahl der sonst bei bekannten Unwuchterregern erforderlichen Bauteile reduzieren. Dabei lassen sich mehrere Erregereinheiten (Elektromotoren mit davon angetriebenen Unwuchtmassen) in einer Einheit zusammenfassen. Dadurch sinken der Platzbedarf und insbesondere die Grundfläche des Unwuchtantriebs. Durch die Kompaktheit nimmt auch die Robustheit des Unwuchterregers zu. Störende Kippmomente zwischen den Unwuchterregern können eliminiert werden.

Diese und weitere Vorteile und Merkmale der Erfindung werden nachfolgend anhand von Beispielen unter Zuhilfenahme der begleitenden Figuren näher erläutert. Es zeigen:
- **Fig. 1**: in schematischer Draufsicht einen erfindungsgemäßen Unwuchterreger mit zwei Rotoren;
- **Fig. 2**: eine Variante zu Fig. 1;
- **Fig. 3**: in schematischer Draufsicht eine Erregereinheit, die in dem erfindungsgemäßen Unwuchterreger zum Einsatz kommen kann;
- **Fig. 4**: ein Beispiel für eine Erregereinheit in Perspektivansicht;
- **Fig. 5**: die Erregereinheit von Fig. 4 in Seitenansicht;
- **Fig. 6**: eine Variante zu den Unwuchterregern in den Fig. 1 und 2;
- **Fig. 7**: in schematischer Draufsicht ein Beispiel für eine Bodenverdichtungsvorrichtung;
- **Fig. 8**: eine Variante für einen Unwuchterreger mit vier Rotoren;
- **Fig. 9**: eine Variante zu dem Unwuchterreger von Fig. 8;
- **Fig. 10 bis 12**: weitere Varianten zu dem Unwuchterreger von Fig. 8;
- **Fig. 13**: eine Erläuterung der Fliehkraftwirkungen bei einem Betrieb des Unwuchterregers von Fig. 2;
- **Fig. 14**: eine Erläuterung der Fliehkraftwirkungen bei einem Betrieb des Unwuchterregers von Fig. 9; und
- **Fig. 15**: eine Erläuterung der Fliehkraftwirkungen bei einem Betrieb des Unwuchterregers von Fig. 11.

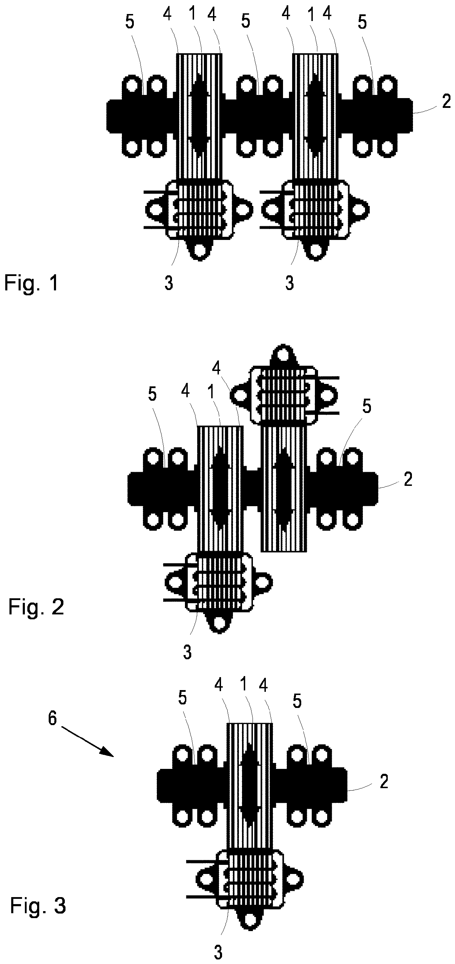

Fig. 1 zeigt eine Bodenverdichtungsvorrichtung mit zwei Rotoren 1, die auf einer gemeinsamen Drehachse 2 gegenläufig drehbar gelagert sind. Die Drehachse 2 kann dabei selbst feststehen, muss also nicht ihrerseits drehbar gelagert sein. Entscheidend ist, dass die Rotoren 1 zueinander gegenläufig, also hinsichtlich ihrer Drehrichtung entgegengesetzt drehbar sind.

Die Rotation der Rotoren 1 wird durch zwei Statoren 3 bewirkt, die auf einer Seite der Rotoren 1 angeordnet sind.

Ein Stator 3 bildet im Zusammenspiel mit dem ihm zugeordneten Rotor 1 einen Elektromotor. Zur Ansteuerung jedes Elektromotors ist eine nicht dargestellte Steuerung vorgesehen, die auch in der Lage ist, präzise die jeweilige Winkel- bzw. Rotationsstellung des Rotors 1 zu erkennen und zu beeinflussen.

In dem gezeigten Beispiel umschließen die Statoren 3 somit die Rotoren 1 nicht vollständig am Umfang, sondern nur teilweise über ein Kreissegment mit einem bestimmten Winkel kleiner als 360°. Damit kann erheblicher Bauraum gespart werden.

Ein Beispiel dafür, wie Statoren nur ein Kreissegment am Umfang eines Rotors abdecken, ist aus der DE 10 2020 100 842 A1 bekannt.

An den Stirnflächen der Rotoren 1 sind jeweils Unwuchtmassen 4 angebracht, die durch mehrere Unwuchtmassenelemente gebildet sein können. Insbesondere können die Unwuchtmassenelemente in Form von Blechen ausgebildet sein, die an den Stirnseiten der Rotoren 1, also seitlich, befestigt sind und somit für jeden Rotor 1 in ihrer Gesamtheit eine Unwuchtmasse 4 bilden.

"Unwuchtmasse" bedeutet dabei, dass an dem Rotor 1 eine exzentrische Masse vorgesehen ist, die bei Rotation eine Fliehkraft bewirkt.

Die Drehachse 2 ist durch Lager 5 in einem nicht dargestellten Gehäuse oder auf einer nicht dargestellten Bodenkontaktplatte gelagert.

Da die für die aus den Rotoren 1 und Statoren 3 vorgesehene Steuerung für die einzelnen Elektromotoren derart ausgebildet ist, dass sie nicht nur die Drehzahl der Rotoren 1, sondern auch präzise die jeweilige Winkelstellung der Rotoren 1 und damit die Phasenlage bzw. Drehstellung der Rotoren 1 zueinander beeinflussen kann, können die bei Rotation der beiden Rotoren 1 durch die Unwuchtmassen 4 erzeugten Fliehkraftvektoren genau zueinander eingestellt werden.

Insbesondere sind die Rotoren 1 gegenläufig gegeneinander drehbar, so dass - je nach Einstellung - Teilkomponenten der Fliehkraftvektoren sich addieren oder sich gegenseitig kompensieren können. Dies wird später nochmals erläutert.

Die Drehrichtung der Rotoren 1 ist durch Doppelpfeile dargestellt, wobei im Betrieb jeweils unterschiedliche Drehrichtungen der beiden Rotoren 1 erzielt werden sollen.

Fig. 2 zeigt eine Variante zu Fig. 1, bei der die Statoren 3 auf unterschiedlichen Seiten angebracht sind, um Bauraum zu sparen. Zudem kann die Lagerung der Drehachse 2 bei dieser Variante vereinfacht werden, weil die mittleren Lager 5 im Unterschied zur Bauform von Fig. 1 entfallen.

Fig. 3 zeigt einen Teil des Unwuchterregers der Fig. 1 und 2 als einzelne Einheit. Bei dieser Variante ist es möglich, einen Unwuchterreger in mehrere Teilerreger 6 bzw. Einheiten zu zergliedern. Fig. 3 zeigt einen solchen Teilerreger 6. Beispielsweise können zwei der in Fig. 3 gezeigten Teilerreger 6 einen Erreger in der Art der Fig. 1 oder 2 bilden, wenn die beiden Teilerreger 6 der Fig. 3 kombiniert werden. Auch dabei ist es anzustreben, dass dann zwei Drehachsen 2 koaxial zueinander, also auf einer gemeinsamen virtuellen Drehachse liegen, damit die Anordnung von Fig. 1 erreicht werden kann.

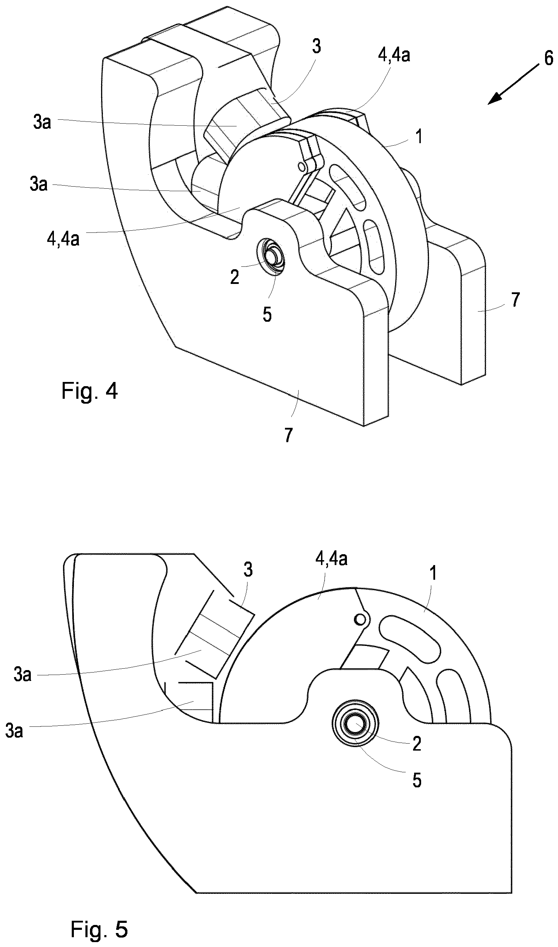

Fig. 4 zeigt ein Beispiel für einen in Fig. 3 nur schematisch dargestellten Teilerreger 6. Fig. 5 zeigt den Teilerreger in Seitenansicht.

Dabei sind die Lager 5 in zwei stabile Seitenwangen 7 eingesetzt, die eine Lagereinrichtung bilden. Die Lager 5 nehmen die Drehachse 2 drehbar auf. Auf der Drehachse 2 ist der Rotor 1 gehalten und kann z.B. mit Hilfe einer Wellen-Naben-Verbindung mit der Drehachse 2 gekoppelt sein. Ebenso ist es auch möglich, dass in der Nabe des Rotors 1 ein Lager vorgesehen ist, mit dem der Rotor 1 auf der Drehachse 2 drehbar gelagert ist. Die Drehachse 2 muss dann ihrerseits nicht mehr in den Seitenwangen 7 drehbar gelagert sein, sondern kann starr in den Seitenwangen 7 gehalten werden.

An den Stirnseiten des Rotors 1 sind die Unwuchtmassenelemente 4a befestigt, die gemeinsam die Unwuchtmasse 4 bilden. Es ist in Fig. 4 gut erkennbar, dass die Unwuchtmasse 4 durch mehrere Blechelemente gebildet ist, die zusammen an den Stirnseiten des Rotors 1 befestigt sind.

Am Außenumfang des Rotors 1 ist der Stator 3 angeordnet. Dabei erstreckt sich der Stator 3 nicht über den gesamten Umfang des Rotors 1, sondern nur über einen Teilumfang, also über ein Kreissegment. Im vorliegenden Beispiel erstreckt sich der Stator 3 etwa über einen Winkel von 90° und weist drei Statorpole 3a auf, von denen in den Fig. 4 und 5 nur zwei erkennbar sind.

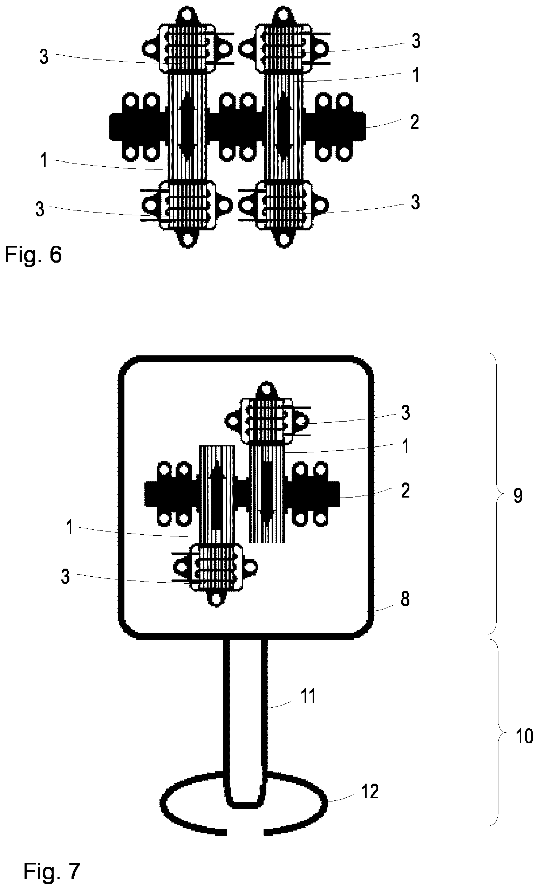

Fig. 6 zeigt in schematischer Draufsicht eine Anordnung ähnlich zu Fig. 1, wobei jedoch für jeden Rotor 1 zwei Statoren 3 vorgesehen sind. Durch das Bereitstellen von zwei Statoren 3 für jeden Rotor 1 kann jeweils ein besonders leistungsfähiger, kräftiger Elektromotor erreicht werden.

Fig. 7 zeigt in schematischer Draufsicht eine als Bodenverdichtungsvorrichtung dienende Vibrationsplatte.

Der grundsätzliche Aufbau einer derartigen Vibrationsplatte ist bekannt und z.B. in Fig. 1 der DE 10 2020 100 842 A1 gezeigt.

Die Vibrationsplatte von Fig. 7 weist eine Bodenkontaktplatte 8 auf, auf der der Unwuchterreger von Fig. 2 angeordnet ist.

Die Bodenkontaktplatte 8 und der Unwuchterreger mit den Rotoren 1, den Statoren 3 und der Drehachse 2 bilden zusammen eine Untermasse 9.

In Zeichenebene gesehen oberhalb von der Untermasse 9 ist eine nur teilweise dargestellte Obermasse 10 angeordnet, mit einer Führungsdeichsel 11 und einem Bedienerhandgriff 12. Ein Bediener kann dementsprechend durch Ergreifen des nur schematisch dargestellten Führungshandgriffs 12 über die Führungsdeichsel 11 die gesamte Vibrationsplatte lenken und führen. Die Obermasse 10 kann noch weitere Komponenten, z.B. einen Akku als Energiespeicher für den Betrieb der Elektromotoren sowie entsprechende Gehäuse- oder Rahmenkomponenten zum Tragen des Akkus und zum Befestigen der Führungsdeichsel 11 aufweisen, die jedoch in Fig. 7 nicht gezeigt sind.

Die Obermasse 10 ist von der Untermasse 9 schwingungsentkoppelt mit Hilfe einer entsprechenden, nicht dargestellten Schwingungsentkopplungsvorrichtung. Hierbei kann es sich z.B. um Gummipuffer handeln.

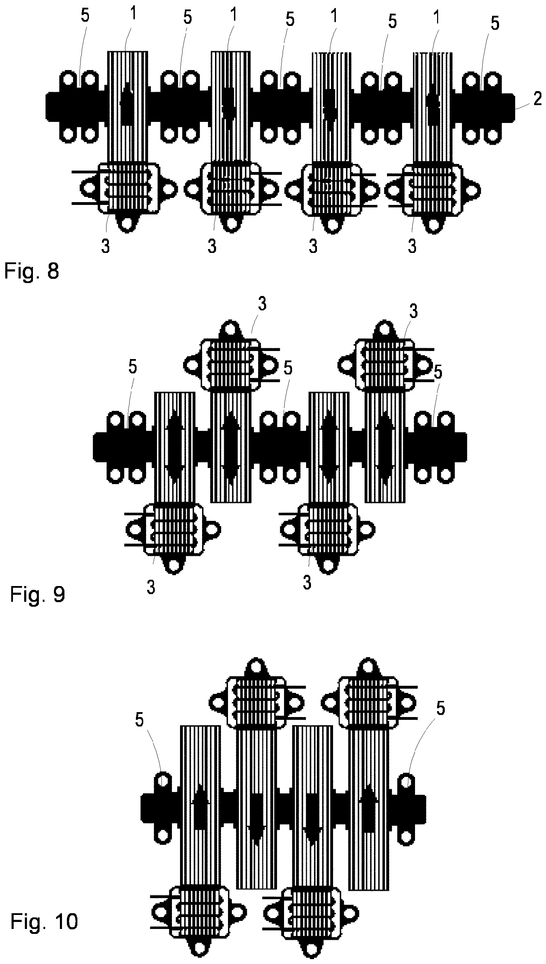

Fig. 8 zeigt einen Unwuchterreger mit insgesamt vier Rotoren 1, die koaxial zueinander angeordnet auf einer gemeinsamen Drehachse 2 drehbar gelagert sind. Jeder der Rotoren 1 bildet zusammen mit einem ihm zugeordneten Stator 3 einen eigenen Elektromotor.

Die Drehrichtung der Rotoren 1 kann durch entsprechende Ansteuerung der Statoren 3 eingestellt werden. Im vorliegenden Beispiel drehen die beiden äußeren Rotoren 1 nach oben, während die beiden innenliegenden Rotoren 1 nach unten drehen (vgl. Pfeilrichtung).

Fig. 9 ist eine Variante zu Fig. 8, bei der zwei der Statoren 3 gegenüberliegend angeordnet sind, ähnlich wie bei der Bodenverdichtungsvorrichtung von Fig. 2. Dadurch kann auch hier ein kompakter Aufbau erzielt werden.

Fig. 10 ist eine weitere Variante, bei der die Drehachse 2 nur an ihren äußeren Enden mit Hilfe von Lagern 5 gelagert ist, während im Inneren, zwischen den Rotoren 1, keine Lagerstellen vorgesehen sind, anders als bei den Fig. 8 und 9.

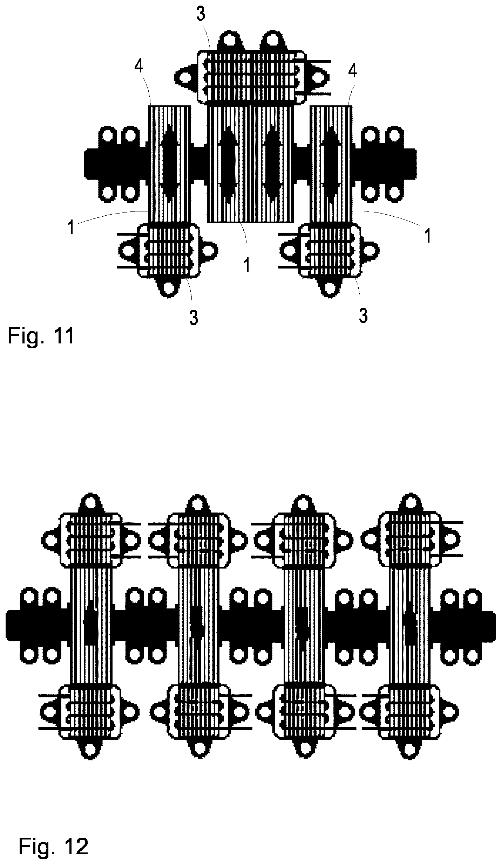

Fig. 11 zeigt in schematischere Draufsicht eine weitere Variante, bei der die beiden innenliegenden Rotoren 1 zu einem gemeinsamen Rotor 1, allerdings mit doppelter Masse, insbesondere doppelter Unwuchtmasse 4, zusammengefasst ist. Dementsprechend ist auch der zugehörige Stator 3 größer bzw. erstreckt sich über eine größere Breite, um den in der Mitte liegenden, doppelt so schweren Rotor 1 drehend antreiben zu können. Die Bezugnahme auf die Masse des Rotors 1 bezieht sich dabei im Wesentlichen auf die Unwuchtmassen 4, so dass der innenliegende Rotor 1 eine Unwuchtmasse 4 trägt, die doppelt so groß ist wie die Unwuchtmassen 4 der außenliegenden Rotoren 1.

Fig. 12 zeigt eine weitere Variante, bei der für jeden Rotor 2 zwei gegenüberliegende Statoren 3 vorgesehen sind.

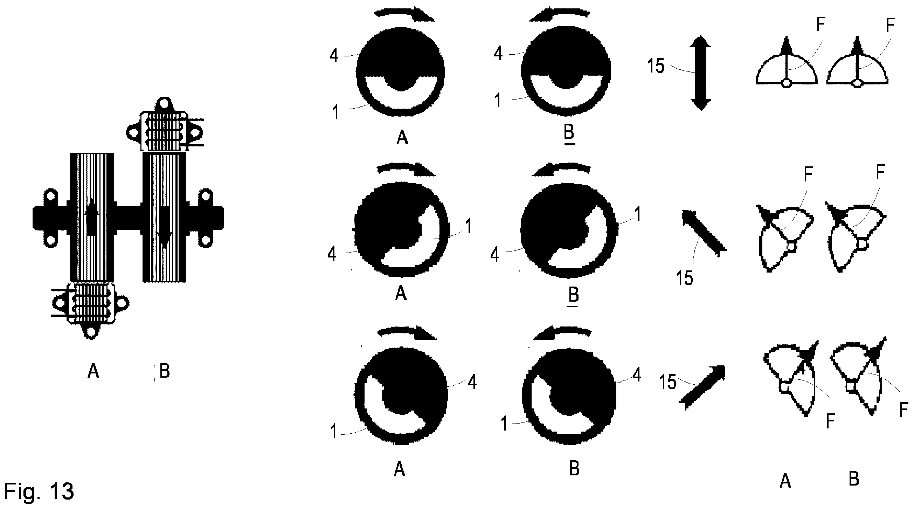

In Fig. 13 wird die Wirkungsweise des beispielhaft in Fig. 2 gezeigten Unwuchterregers erläutert.

Der Unwuchterreger weist zwei Erregereinheiten A und B auf, mit Rotoren 1, die auf einer gemeinsamen Drehachse 2 gelagert sind. An den Stirnseiten der Rotoren 1 sind die Unwuchtmassen 4 in Form von Teil-Unwuchtmassen angebracht.

Im mittleren Bildteil von Fig. 13 sind beispielhaft jeweilige Stellungen der Rotoren 1 mit den von ihnen getragenen Unwuchtmassen 4 dargestellt.

In Zeile a) ist eine Stellung gezeigt, bei der die Unwuchtmassen 4 der Erregereinheiten A und B jeweils zum gleichen Zeitpunkt oben stehen. Im rechten Bildteil von Zeile a) sind die Fliehkraftvektoren F dargestellt. Da die Unwuchtmassen 4 oben stehen, sind dementsprechend die beiden Fliehkraftvektoren F der beiden Erregereinheiten A, B ebenfalls nach oben gerichtet.

Wenn die beiden Rotoren 1 jeweils eine 180° Drehung vollziehen, drehen sich auch die Unwuchtmassen 4 um 180° gegenläufig. Die dabei entstehenden Horizontalkomponenten der Fliehkraftvektoren F heben sich gegenseitig auf, während sich die Vertikalkomponenten addieren, wie durch einen resultierenden Kraftvektor 15 (Doppelpfeil links von der Darstellung der Fliehkraftvektoren F) gezeigt.

In der Zeile b) von Fig. 13 ist die Phasenlage der beiden Rotoren 1 und damit der Unwuchtmassen 4 mit Hilfe der Steuerung verändert worden, so dass die beiden gegenläufig drehbaren Unwuchtmassen 4 nun in einen Winkel von ca. 45° nach links oben stehen. Dementsprechend sind auch die Fliehkraftvektoren F gerichtet, wie im rechten Bildteil von Zeile b) gezeigt.

In diesem Fall können sich auch die Horizontalkomponenten der Fliehkraftvektoren zumindest teilweise addieren, wodurch der resultierende Kraftvektor 15 schräg nach links geneigt ist.

In Zeile c) ist eine Stellung der Rotoren 1 gezeigt, bei der die Phasenlage derart verändert wurde, dass die Unwuchtmassen 4 in der dort gezeigten Darstellung nach rechts oben in einem Winkel von etwa 45° verdreht sind. Dementsprechend sind auch die Fliehkraftvektoren F nach rechts oben und folglich auch der resultierende Kraftvektor 15 nach rechts oben verdreht.

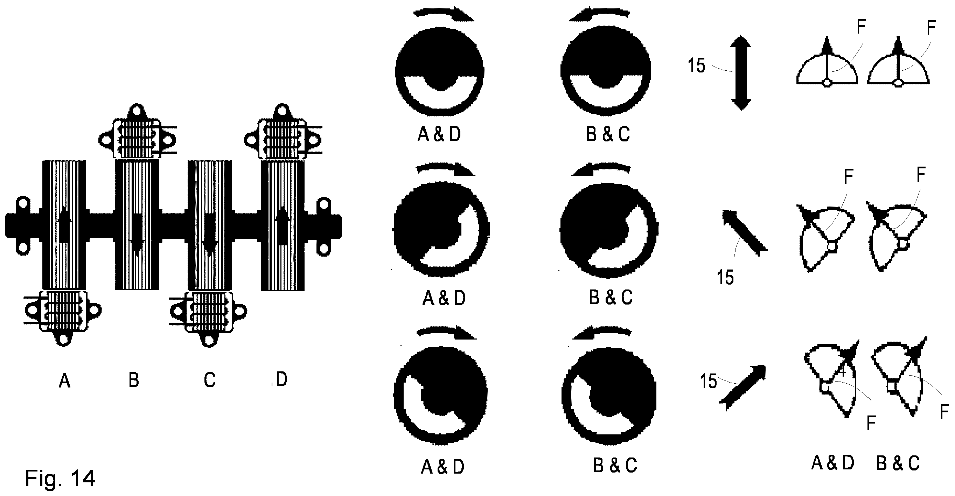

Fig. 14 zeigt ein Beispiel für einen Unwuchterreger mit Erregereinheiten A, B, C und D, der vorher bereits anhand von Fig. 10 erläutert wurde. Auch hier werden verschiedene Drehstellungen der Rotoren 1 und der Unwuchtmassen 4 gezeigt, um die Auswirkungen auf die Fliehkraftvektoren F und den dadurch bewirkten resultierenden Kraftvektor 15 zu verdeutlichen.

In Zeile a) von Fig. 14 beispielsweise sind für die Erregereinheiten A und D einerseits sowie die Erregereinheiten B und C andererseits jeweils die Stellung der gegenläufig drehbaren Rotoren 1 und Unwuchtmassen 4.

In den Zeilen b) und c) von Fig. 14 sind analog zu Fig. 13 weitere Stellungen gezeigt.

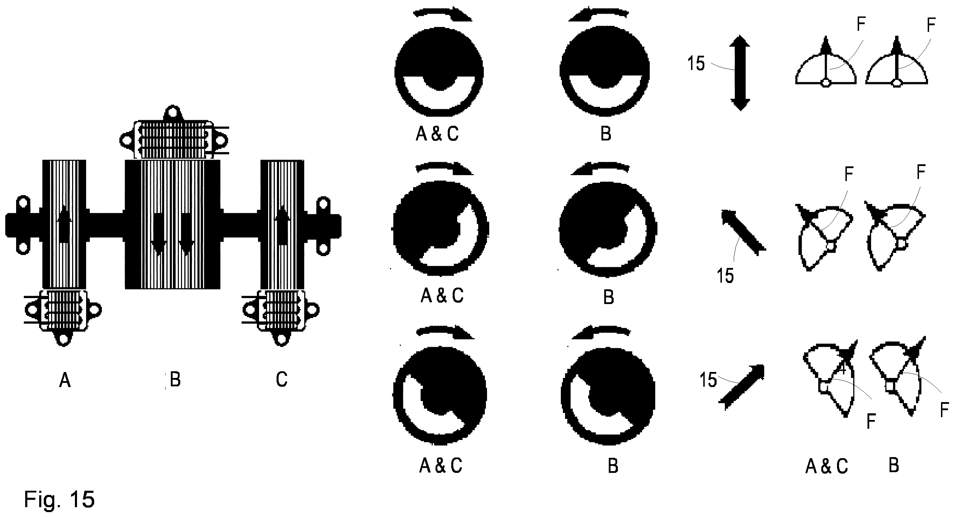

Fig. 15 zeigt den Unwuchterreger von Fig. 11, mit Erregereinheiten A, B und C. In den Zeilen a) bis c) sind analog zu den Figuren 13 und 14 entsprechende Beispiele für Drehstellungen der gemeinsam mit gleicher Drehrichtung (Erregereinheiten A, C) sowie - mit doppelt so großer Unwuchtmasse 4 - gegenläufig drehbaren (Erregereinheit B) Rotoren 1 und Unwuchtmassen 4 dargestellt.

## Patentansprüche

1. Unwuchterreger für eine Bodenverdichtungsvorrichtung, mit
- wenigstens zwei drehbaren Unwuchtmassen (4), die zueinander gegenläufig drehbar gelagert sind; und mit
- wenigstens zwei Rotoren (1);
wobei
- jeweils eine der Unwuchtmassen (4) mit einem der Rotoren (1) gekoppelt ist;
- die wenigstens zwei Unwuchtmassen (4) und die zugehörigen Rotoren (1) koaxial zueinander gelagert sind; und wobei
- jedem der Rotoren (1) ein Stator (3) zugeordnet ist, derart, dass der Rotor (1) und der zugeordnete Stator (3) einen Elektromotor bilden.

2. Unwuchterreger nach Anspruch 1, wobei eine Steuerung vorgesehen ist, zum Ansteuern der Elektromotoren und damit zum Einstellen und Verändern der Phasenlage der wenigstens zwei Unwuchtmassen (4) zueinander.

3. Unwuchterreger nach einem der Ansprüche 1 oder 2, wobei wenigstens einer der Statoren (3) den ihm zugeordneten Rotor (1) am Umfang nur über ein Kreissegment umgibt.

4. Unwuchterreger nach einem der vorstehenden Ansprüche, wobei die mit einem Rotor (1) gekoppelte Unwuchtmasse (4) zwei Unwuchtmassenelemente (4a) aufweist, die jeweils seitlich an den Stirnseiten des Rotors (1) angebracht sind.

5. Unwuchterreger nach einem der vorstehenden Ansprüche, wobei
- eine Achse (2) vorgesehen ist; und wobei
- die Unwuchtmassen (4) mit den zugeordneten Rotoren (1) auf der Achse (2) gegenläufig drehbar gemeinsam gelagert sind.

6. Unwuchterreger nach einem der vorstehenden Ansprüche, wobei jede der Unwuchtmassen (4) mit ihrem zugeordneten Rotor (1) auf einem eigenen Achsenelement (2) gelagert ist.

7. Unwuchterreger nach einem der vorstehenden Ansprüche, wobei jeder der Rotoren (1) mit einem Achsenelement (2) gekoppelt ist, das in einer Lagereinrichtung (5) drehbar gelagert ist.

8. Unwuchterreger nach einem der vorstehenden Ansprüche, wobei die Lagereinrichtung (5), das Achsenelement (2), der Stator (3), der Rotor (1) und die mit dem Rotor (1) gekoppelte Unwuchtmasse (4) eine Erregereinheit (6) bilden.

9. Bodenverdichtungsvorrichtung, mit
- einer Obermasse (10);
- einer relativ zu der Obermasse (10) beweglichen Untermasse (9), mit einer Bodenkontaktplatte (8) zur Bodenverdichtung;
- einer zwischen der Obermasse (10) und der Untermasse (9) wirkenden Schwingungsentkopplungsvorrichtung; und mit
- einem zu der Untermasse (9) gehörenden Unwuchterreger gemäß einem der vorstehenden Ansprüche, zum Beaufschlagen der Bodenkontaktplatte (8) mit einer Unwuchtkraft.

10. Bodenverdichtungsvorrichtung nach Anspruch 9, wobei
- der Unwuchterreger wenigstens zwei Erregereinheiten (6) aufweist, die auf der Bodenkontaktplatte (8) angebracht sind; und wobei
- die Erregereinheiten (6) derart zueinander auf der Bodenkontaktplatte (8) angeordnet sind, dass die Rotoren (1) der beiden Erregereinheiten (6) auf einer gemeinsamen virtuellen Drehachse (2) koaxial zueinander angeordnet und zueinander gegenläufig drehbar sind.

11. Bodenverdichtungsvorrichtung nach Anspruch 9 oder 10, wobei die Steuerung ausgebildet ist, um die Phasenlage der Rotoren (1) und damit der Unwuchtmassen (4) in den Erregereinheiten (6) in einer gewünschten Weise einzustellen.
